# EUROPÄISCHE PATENTSCHRIFT

(11) **EP 0 698 465 B1**
(45) Veröffentlichungstag und Bekanntmachung des Hinweises auf die Patenterteilung: **15.09.1999**
(21) Anmeldenummer: 95110448.8
(22) Anmeldetag: 05.07.1995
(51) Int. Cl.: B29C 45/14

(54) **Baukörper, wie Abdeck-, Verkleidungselement od. dgl. sowie Verfahren zum Herstellen eines solchen**
Construction element such as covering or trim element or the like as well as method for manufacturing such an element
Elément de construction tel qu'élément de revêtement ou d'habillage ou analogue ainsi que procédé de fabrication d'un tel élément

(30) Priorität: 25.08.1994 DE 4430103
(43) Veröffentlichungstag der Anmeldung: 28.02.1996
(73) Patentinhaber: Johnson Controls Interiors GmbH, 42285 Wuppertal (DE)
(72) Erfinder: Dabringhaus, Volker, D-42109 Wuppertal (DE); Flüshöh, Dieter, D-58332 Schwelm (DE)

(56) Entgegenhaltungen:
- EP-A- 0 502 606
- WO-A-84/01352
- DE-A- 3 434 366
- DE-A- 4 122 412
- FR-A- 2 702 990
- PATENT ABSTRACTS OF JAPAN vol. 4 no. 88 (M-017) ,24.Juni 1980 & JP-A-55 046948 (NIPPON PLAST CO LTD) 2.April 1980,
- PATENT ABSTRACTS OF JAPAN vol. 9 no. 245 (M-418) [1968] ,2.Oktober 1985 & JP-A-60 097816 (TOYOTA JIDOSHA KK) 31.Mai 1985,
- PATENT ABSTRACTS OF JAPAN vol. 16 no. 563 (M-1342) ,4.Dezember 1992 & JP-A-04 219220 (NISSHA PRINTING CO LTD) 10.August 1992,

## Beschreibung

Die Erfindung bezieht sich auf einen Baukörper, wie Abdeck-, Verkleidungselement od. dgl., insbesondere für den Innenraumbereich von Fahrzeugen, welcher als Kunststoff-Spritzgußteil mit einer hinterspritzten Dekormaterialbann an der Oberfläche ausgebildet ist, die zumindest ein Stirnende des Kunststoff-Spritzgußteils mit einem Umbug umgreift, von dem ein Überstand abgeschnitten ist.

Das Hinterspritzen von Dekormaterialbahnen zwecks Herstellung formschöner Baukörper ist seit längerem bekannt. Beim Hinterspritzen von Dekormaterialbahnen aus Textilmaterial, Leder, Folien od. dgl. ergibt sich die Schwierigkeit, einen sauberen, formschönen Randabschluß an den Kanten des entsprechenden Formteils zu realisieren. Oftmals werden aber Baukörper, wie Abdeck-, Verkleidungselemente od. dgl. benötigt, bei denen zumindest eine Randkante mit einem Dekormaterialbahn-Umbug versehen ist. Bei einem internen Stand der Technik hat man sich bisher mit einem Scheinumbug von 90° begnügt, was aber zu Problemen geführt hat, denn die den Scheinumbug begrenzende Schnittkante kann bei Folienmaterial sehr scharfkantig sein und zu Schnittverletzungen führen, während bei Textilmaterial die Gefahr eines Ausfransens besteht, worunter natürlich das optische Erscheinungsbild leidet.

Bei Baukörpern der in Rede stehenden Art ist es auch bekannt, einen echten Umbug um 180° durch einen Überstand der Dekormaterialbahn zu bilden, indem der Überstand mit Haftkleber besprüht und um das entsprechende Stirnende des Baukörpers herumgeschlagen wurde. Eine solche Maßnahme ist jedoch abzulehnen, weil sie Handarbeit verlangt und daher kostenintensiv ist, weil die Gefahr der Beschmutzung durch den Kleber besteht und weil das Dekormaterial an der Rückseite aufträgt, was aus verschiedenen Gründen oftmals unerwünscht ist.

Die JP-A- 04 21 92 20 (& Patent Abstracts of Japan, vol. 16, no. 563 (M-13 42)) zeigt einen Baukörper, welcher als Kunststoff-Spritzgußteil mit einer hinterspritzten Folie mit Bildern an der Oberseite versehen ist. Die Folie umgreift zumindest ein Stirnende des Kunststoff-Spritzgußkörpers mit einem Umbug. Ein Folienüberstand am Stirnende des Kunststoffkörpers wird nach dessen Aushärten abgeschnitten, so daß nur der Filienumbug am Kunststoff-Spritzgußkörper verbleibt.

Ausgehend von einem Baukörper der eingangs genannten Art liegt der Erfindung die Aufgabe zugrunde, bei einem solchen eine optische Verbesserung an zumindest einer Stirnkante zu erzielen, und zwar in besonders einfacher, kostengünstiger und zuverlässiger Weise sowie Vorsorge dafür zu treffen scharfe Schnittkanten zu vermeiden.

Zur Lösung dieser Aufgabe wird erfindungsgemäß vorgeschlagen, daß die Schnittkante am Umbug so ausgeführt ist, daß sie plan mit der Unterseite des Baukörpers abschließt, und daß das Kunststoff-Spritzgußteil am umbugseitigen Stirnende im Übergangsbereich zur Baukörperunterseite eine den freien Endbereich der Dekormaterialbahn bzw. des Umbugs aufnehmende Hohlkehle aufweist, wobei die Anordnung so getroffen ist, daß auch der freie Endbereich des Umbugs plan mit der Unterseite des Baukörpers abschließt.

Durch die Erfindung wird ein Baukörper mit zumindest einem dekorativen Randabschluß vorgeschlagen, bei dem die Dekormaterialbahn das zumindest eine Ende des Kunststoff-Spritzgußkörpers nach Art eines echten Umbugs von 180° umschließt, völlig mit Kunststoffmaterial hinterspritzt ist und auf der Rückseite des Baukörpers nicht aufträgt. Die Beabstandung der unvermeidbaren Schnittkante vom Baukörperstirnende und die plane Anordnung des Dekormaterialendbereichs in der Baukörperunterseite schließt die Gefahr von Schnittverletzungen aus und verhindert auch weitgehend die Gefahr eines Ausfransens bei aus Textilmaterial bestehenden Dekormaterialbahnen.

Der erfindungsgemaße Baukörper ist für die unterschiedlichsten Einsatzzwecke, bei denen es auf zumindest einen dekorativen Randabschluß ankommt geeignet. Gemäß einer besonderen Ausführungsform der Erfindung, ist der Baukörper jedoch als Schiebedeckel nach Art einer Jalousie ausgebildet. Gerade bei einem Schiebedeckel, wie er im Kraftfahrzeuginnenraum als Gehäuse-, Behälter- od. dgl. Abschluß häufig anzutreffen ist, machen sich die durch die Erfindung erzielten Vorteile, wie dekorativer Randabschluß, gratfreies Stirnende, unsichtbare Schnittkante, überstandsfreie Umbuganordnung usw. besonders bemerkbar, weil ein solches Bauteil sich im unmittelbaren Sichtbereich der Fahrzeuginsassen befindet und häufig benutzt wird.

Ein Ausführungsbeispiel der Erfindung wird nachfolgend anhand der Zeichnung näher erläutert, und es zeigen:

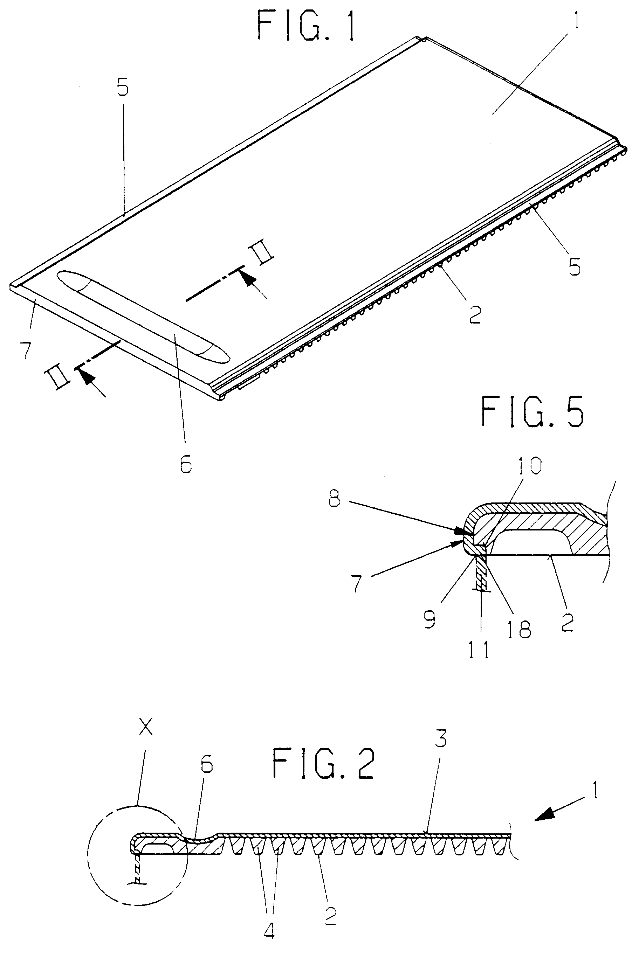

- Fig. 1: eine Ansicht eines Baukörpers,
- Fig. 2: einen Schnitt, folgend der Linie II-II in Fig. 1,
- Fig. 3: ein geöffnetes Formwerkzeug,
- Fig. 4: ein geschlossenes Formwerkzeug und
- Fig. 5: eine Einzelheit X nach Fig. 2 im vergrößerten Maßstab.

Bei dem dargestellten Baukörper handelt es sich um einen nach Art einer Jalousie ausgebildeten Schiebedeckel 1, welcher als Kunststoff-Spritzgußteil 2 mit einer hinterspritzten Dekormaterialbahn 3 ausgebildet ist. Das Kunststoff-Spritzgußteil 2 besteht hier aus einer Vielzahl von quer zur Schieberichtung des Schiebedeckels 1 verlaufenden Rippen 4, die mit geringem Abstand in paralleler Anordnung zueinander verlaufen. Durch die Rippen 4 erhält der Schiebedeckel 1 seinen jalousieartigen Charakter. Natürlich kann die Dekormaterialbahn anstelle der Rippen 4 flächig hinterspritzt sein, um ein starres Formteil zu bilden.

Der Schiebedeckel 1 ist an den Längsseiten mit üblichen Führungsleisten 5 und an der Oberfläche mit einer Betätigungshandhabe in Form einer Griffleiste oder, wie dargestellt, Griffmulde 6 ausgebildet. Wesentlich bei dem neuen Baukörper bzw. Schiebedeckel 1 ist die Gestaltung des vorderen Kantenbereichs desselben, bei dem vorgesehen ist, daß die Dekormaterialbahn 3 diesen mit einem Umbug 7 umgreift und um den gesamten Umbugbereich hinterspritzt ist. In Fig. 5 ist der Umbug 7 besonders deutlich dargestellt und es ist ersichtlich, daß der Umbug 7 das freie Stirnende 8 des Kunststoff-Spritzgußteils 2 um 180° umgreift. Dabei sitzt der Endabschnitt 9 des Umbugs 7, der parallel zur Oberfläche und Unterfläche des Schiebedeckels 1 verläuft, in einer Hohlkehle 10, die im Übergangsbereich vom Stirnende 8 zur Schiebedeckelunterseite ausgebildet ist. Der gestrichelt dargestellte Überstand 11 der Dekormaterialbahn 3 wird durch einen Schnitt abgetrennt, derart, daß eine mit der Unterseite des Schiebedeckels plan verlaufende Schnittkante 18 entsteht, die klar ersichtlich vom Schiebedeckelstirnende beabstandet ist.

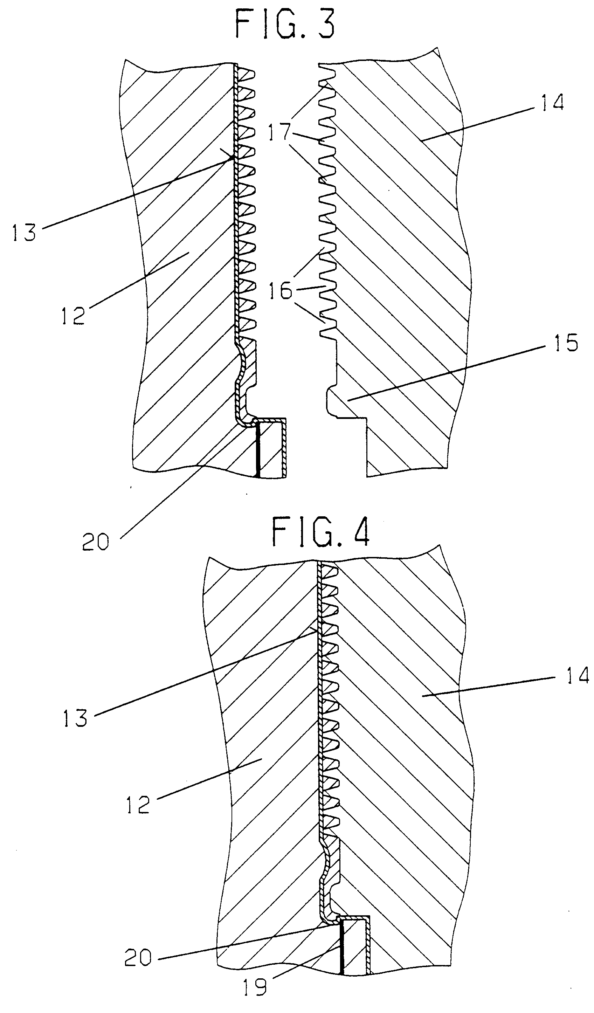

Das Beispiel zum Herstellen eines Schiebedeckels 1 mit einem Umbug 7 kann in einem Werkzeug realisiert werden, bei dem eine Werkzeughälfte 12 mit einem Formhohlraum 13, der an einer stirnseitigen Begrenzungswand eine hinterschnittene Nut 20 (entsprechend der Hohlkehle 10) aufweist und einer Werkzeughälfte 14 mit einem in den Formhohlraum bereichsweise eintauchenden Ansatz 15, dessen Kopffläche eine Vielzahl von sich mit Rillen 16 abwechselnden Rippen 17 aufweist. Die Dekormaterialbahn 3 wird bei geöffnetem Werkzeug (Fig. 3) eingelegt. Reim Schließen des Werkzeugs wird die Dekormaterialbahn rahmenartig zwischen den Werkzeughälften eingespannt. Durch Einspritzen des plastifizierten Kunststoffmaterials in die verbleibende Formkavität wird diese ausgefüllt und die Dekormaterialbahn 3 gegen die Wandungen des Formhohlraums 13 gezwungen, so daß diese sich der Form der Griffmulde 6 und insbesondere der Form der hinterschnittenen Nut, welche zur Bildung der Hohlkehle 10 vorgesehen ist, anpaßt.

Nach dem Verfestigen des Kunststoffmaterials kann der Beschnitt der Dekormaterialbahn 3 vorgenommen werden, wobei die Bildung der Schnittkante 18 im Werkzeug erfolgen kann, mittels eines im Werkzeug gegenläufig verschiebbar gelagerten Trennelements 19.

## Patentansprüche

1. Baukörper, wie Abdeck-, Verkleidungselement od. dgl., insbesondere für den Innenraumbereich von Fahrzeugen, welcher als Kunststoff-Spritzgußteil (2) mit einer hinterspritzten Dekormaterialbahn (3) an der Oberfläche ausgebildet ist, die zumindest ein Stirnende (8) des Kunststoff-Spritzgußteils (2) mit einem Umbug (7) umgreift, von dem ein Überstand (11) abgeschnitten ist, dadurch gekennzeichnet, daß die Schnittkante (18) am Umbug (7) so ausgeführt ist, daß sie plan mit der Unterseite des Baukörpers abschließt und, daß das Kunststoff-Spritzgußteil (2) am umbugseitigen Stirnende (8) im Übergangsbereich zur Baukörperunterseite eine den freien Endbereich (9) der Dekormaterialbahn (3) bzw. des Umbugs (7) aufnehmende Hohlkehle (10) aufweist, wobei die Anordnung so getroffen ist, daß auch der freie Endbereich (9) des Umbugs (7) plan mit der Unterseite des Baukörpers abschließt.

2. Baukörper nach Anspruch 1, dadurch gekennzeichnet, daß derselbe als Schiebedeckel (1) nach Art einer Jalousie ausgebildet ist.

## Claims

1. Constructive element, such as a covering or coating element or the like, in particular for the interior space area of vehicles, formed as an injection moulded piece (2) made of synthetic material having on its surface a ribbon of decorative material (3) injected at the rear, which surrounds with an encompassing coating (7) at least one front extremity (8) of the injection moulded piece (2) made of synthetic material, from the encompassing coating being cut a projection (11), characterised in that the cut edge (18) on the encompassing coating (7) is realised in such a manner that it closes flush with the lower side of the constructive element, and in that at the front extremity (8) on the side of the encompassing coating the injection moulded piece (2) made of synthetic material presents in the junction area with the lower side of the constructive element a hollow throat (10), housing the free extremity area (9) of the ribbon made of decorative material (3) respectively of the encompassing coating (7), the disposition being such that also the free extremity area (9) of the encompassing coating (7) closes so that its plane is flush with the lower side of the constructive element,

2. Constructive element according to claim 1, characterised in that it is shaped as a sliding lid (1) in the manner of a Venetian blind.

## Revendications

1. Corps de construction, tel qu'élément de recouvrement, élément de revêtement ou similaire, notamment pour la zone intérieure de véhicules, qui est réalisé sous la forme d'un élément en matière plastique moulé par injection (2) présentant une bande de matière décorative (3) moulée par injection de l'arrière, à la surface, qui entoure au moins une extrémité frontale (8) de la pièce en matière plastique moulée par injection (2), par un revêtement enveloppant (7), duquel est découpée une partie dépassante (11), caractérisé en ce que l'arête de coupe (18) sur le revêtement enveloppant (7) est réalisée de manière à se trouver dans le même plan que la face inférieure du plan de construction et en ce que la pièce en matière plastique moulée par injection (2) présente, à l'extrémité frontale (8) côté revêtement enveloppant, dans la zone de transition avec la face inférieure du corps de construction, une gorge creuse (17) recevant la zone terminale (9) libre de la bande de matière décorative (3) ou du revêtement enveloppant (7), la disposition étant telle que la zone d'extrémité (9) libre du revêtement enveloppant (7) se trouve aussi dans le même plan que la face inférieure du corps de construction.

2. Corps de construction selon la revendication 1, caractérisé en ce qu'il est lui-même réalisé sous la forme d'un couvercle coulissant (1) à la manière d'une persienne.
